# EUROPEAN PATENT APPLICATION

(11) **EP 4 702 876 A1**
(43) Date of publication of application: **04.03.2026**
(21) Application number: 23941708.2
(22) Date of filing: 16.06.2023
(51) Int. Cl.: A47B 81/00, A47B 67/00, A47B 97/00, A62C 3/16, A62C 37/38, A62C 35/02, A62D 1/00, G08B 25/14, G08B 17/00, B65D 81/38

(54) **SAFE STORAGE BOX**

(71) Applicant: Jeio Tech Co., Ltd., Daejeon 34025 (KR)
(72) Inventor: KIM, Gi Sung, Daejeon Daejeon 34032 (KR); SHIN, Hyun Joo, Daejeon 34032 (KR)
(74) Representative: BCKIP Part mbB
(86) International application number: PCT/KR2023/008378
(87) International publication number: WO 2024/257925

(57) **Abstract**

The present invention relates to a safe storage box and, more specifically, to a safe storage box comprising: a housing; a plurality of shelves, installed to be spaced apart from each other in the vertical direction inside the housing, and in which a plurality of storage objects can be stored; and a fire extinguishing agent supply unit for supplying a fire extinguishing agent to the inside of a shelf when a fire occurs in a storage object, so that the storage object is immersed in the fire extinguishing agent, the invention having the advantage of being able to quickly suppress a fire when a fire occurs in a storage object.

## Description

### TECHNICAL FIELD

The present invention relates to a safe storage box, and more particularly, to a safe storage box capable of quickly extinguishing a fire occurring in a storage object in the storage box.

### BACKGROUND ART

In recent years, as an energy source increases in price due to depletion of fossil fuel, and interest on environment pollution increases, environment friendly alternative energy sources are required as an essential factor for future.

Thus, researches on various power-generation technologies such as nuclear power, solar power, wind power, and tidal power are being conducted, and interest in power-storage devices for using the produced energy more efficiently is increased.

Furthermore, as demands for mobile devices and electric vehicles are increased, demands for batteries as energy sources are significantly increased. Thus, various researches on batteries capable of satisfying various demands are being conducted.

In particular, lithium-ion-based secondary batteries, which have advantages in energy density, discharge voltage, and output stability, have attracted significant interest. However, the lithium-ion batteries have highly reactive and explosive properties to frequently cause explosion accidents.

Thus, safe storage of the secondary batteries at places in which experiments and researches on secondary batteries are conducted or in which large-scale charging and discharging are performed becomes extremely important. However, a storage box that guarantees safety when storing secondary batteries or quickly suppress a fire occurring in the storage box is not proposed yet.

On the other hand, safety cabinets or reagent storage cabinets used in laboratories are widely used as safe storage boxes for storing acidic or basic substances and flammable materials. However, conventional safe storage boxes may protect storage objects in the storage box from external fires, but may not quickly suppress a fire occurring inside the storage box.

### DISCLOSURE OF THE INVENTION

### TECHNICAL PROBLEM

The present invention provides a safe storage box capable of quickly extinguishing a fire by allowing storage objects to be immersed in a fire extinguishing agent when a fire occurs inside the box.

### TECHNICAL SOLUTION

An embodiment of the present invention provide a safe storage box including: a housing; at least one shelf installed in the housing in a vertically spaced manner to store a plurality of storage objects; and a fire extinguishing agent supply unit configured to supply a fire extinguishing agent into the shelf when a fire occurs in the storage objects, so that the storage objects are immersed in the fire extinguishing agent.

In an embodiment, the fire extinguishing agent supply unit may include: a fire extinguishing agent tank configured to supply a fire extinguishing agent; a main pipe connected to the fire extinguishing agent tank; a plurality of branch pipes branched from the main pipe and respectively disposed above the plurality of shelves; a valve configured to open and close the branch pipes; a fire-detection sensor disposed in the housing to detect a fire occurring in the storage objects; a control unit configured to open the valve when receiving a fire-detection signal from the fire-detection sensor; and a plurality of nozzles respectively disposed on the plurality of branch pipes to spray the fire extinguishing agent supplied from the fire extinguishing agent tank toward the shelves when the valve is opened.

In an embodiment, the fire extinguishing agent supply unit may include: a plurality of fire extinguishing agent tanks respectively installed above the plurality of shelves; nozzles respectively disposed on the plurality of fire extinguishing agent tanks; a valve configured to open and close the nozzles; a fire-detection sensor disposed in the housing to detect a fire occurring in the storage objects; a control unit configured to open the valve when receiving a fire-detection signal from the fire-detection sensor, thereby spraying the fire extinguishing agent stored in the fire extinguishing agent tank toward the shelves through the nozzles.

In an embodiment, the inside of the shelf may be divided into a plurality of separated spaces by partition walls, so that the storage objects are respectively stored in the separated spaces, the fire-detection sensor may detect occurrence of a fire for each separated space, and the nozzles may be provided in the same number as the separated spaces in a one-to-one corresponding manner so that only the nozzle corresponding to the separated space in which a fire occurs sprays the fire extinguishing agent.

In an embodiment, the control unit may close the valve to prevent the fire extinguishing agent from being sprayed after the fire extinguishing agent with an amount corresponding to an inner volume of the separated space is sprayed through the nozzle.

In an embodiment, the inside of the shelf may be divided into a plurality of separated spaces by partition walls, so that the storage objects are respectively stored in the separated spaces, and the fire extinguishing agent supply unit may include: a plurality of fire extinguishing agent tanks respectively disposed above the separated spaces to store a fire extinguishing agent with an amount corresponding to an inner volume of the separated space; and a lid that is installed in a discharge hole defined in a bottom surface of the fire extinguishing agent tank and is melted when a predetermined temperature is reached or burst by pressure of the fire extinguishing agent.

In an embodiment, the storage objects may be secondary batteries, and the fire extinguishing agent supplied from the fire extinguishing agent supply unit may be a NaCl aqueous solution having a predetermined concentration.

In an embodiment, a refractory insulating material may be applied to the inside of the housing, or a vacuum insulation layer maintaining a vacuum state may be provided in the housing.

In an embodiment, the safe storage box may further include a fire alarm system wired or wirelessly connected to the fire-detection sensor to issue an alarm to the outside when a fire occurs in the storage objects, in which the fire alarm system may include a communication unit configured to notify occurrence of a fire to a mobile terminal or a fire station

In an embodiment, the inside of the housing may be divided into a plurality of cells in which the shelves are respectively disposed, and the plurality of cells are independently opened and closed by an inner door or collectively opened and closed by an outer door that rotates outside the inner door.

### ADVANTAGEOUS EFFECTS

The safe storage box according to the present invention has advantages in that the fire extinguishing agent stored in the fire extinguishing agent tank is sprayed into the shelf in which the storage objects are disposed when a fire occurs, so that the storage objects are immersed in the fire extinguishing agent and quickly extinguishing the fire.

Also, the safe storage box according to the present invention has advantages in that the plurality of separated spaces are formed in the shelf by the partition walls, the storage objects are respectively stored in the separated spaces, and then the fire extinguishing agent is sprayed only into the separated space in which the fire occurs, thereby preventing the rest stored times from being damaged by the fire extinguishing agent.

In particular, when the storage objects are secondary batteries, the NaCl aqueous solution is supplied as the fire extinguishing agent, so that the secondary batteries are discharged quickly, thereby preventing fire spreading and explosion.

### BRIEF DESCRIPTION OF THE DRAWINGS

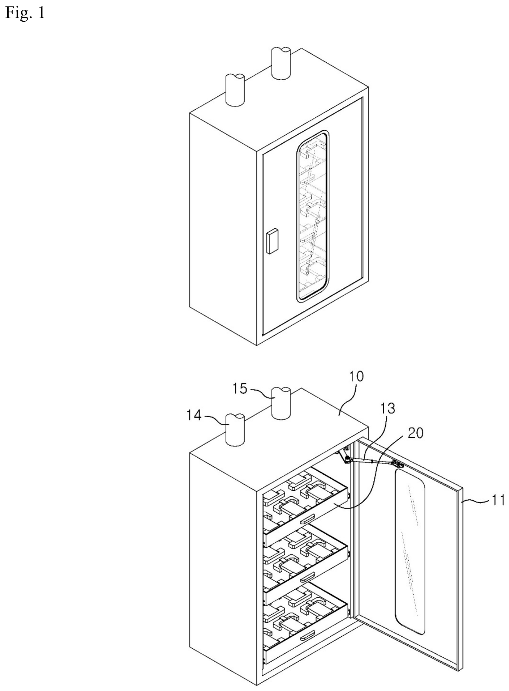

FIG. 1 is a view illustrating an outer shape of a safe storage box for secondary batteries according to the present invention.
FIG. 2 is a view illustrating a first embodiment of the safe storage box for secondary batteries according to the present invention.
FIG. 3 is a view illustrating a second embodiment of the safe storage box for secondary batteries according to the present invention.
FIG. 4 is a view illustrating a third embodiment of the safe storage box for secondary batteries according to the present invention.
FIG. 5 is a view illustrating a fourth embodiment of the safe storage box for secondary batteries according to the present invention.
FIG. 6 is a view illustrating a shelf used in FIGS. 4 and 5.
FIG. 7 is a block diagram illustrating a relationship between a fire-detection sensor and a valve based on a control unit in the safe storage box according to the present invention.
FIG. 8 is a view illustrating a case in which a housing of the safe storage box for secondary batteries according to the present invention is divided into a plurality of cells.

### BEST MODE FOR CARRYING OUT THE INVENTION

A safe storage box according to the present invention includes: a housing; a plurality of shelves installed inside the housing in a vertically spaced manner to store a plurality of storage objects; and a fire extinguishing agent supply unit configured to supply a fire extinguishing agent into the shelves when a fire occurs in the storage objects, so that the storage objects are immersed in the fire extinguishing agent.

### MODE FOR CARRYING OUT THE INVENTION

A safe storage box according to the present invention may be applied to a safe storage box that stores a material having a risk of spontaneous ignition, such as acidic or basic materials, flammable materials, or secondary batteries.

Hereinafter, an embodiment of the safe storage box for storing secondary batteries among safe storage boxes to which the present invention is applied will be described in detail with reference to the accompanying drawings.

The safe storage box for secondary batteries according to the present invention includes: a housing 10; a plurality of shelves 20 that are vertically spaced apart from each other in the housing 10; and a fire extinguishing agent supply unit 30 that supplies a fire extinguishing agent into the shelves 20.

The housing 10 has a storage space therein and includes a door 11 disposed at one side surface thereof. A refractory insulating material is applied to an inner surface of the housing 10 with a predetermined thickness. The refractory insulating material, which is a rigid material having high heat resistance rather than mere thermal insulation, may be made of a material having a high melting point and mechanical strength, such as carbon fiber or silicone, to prevent deformation caused by high heat or flame.

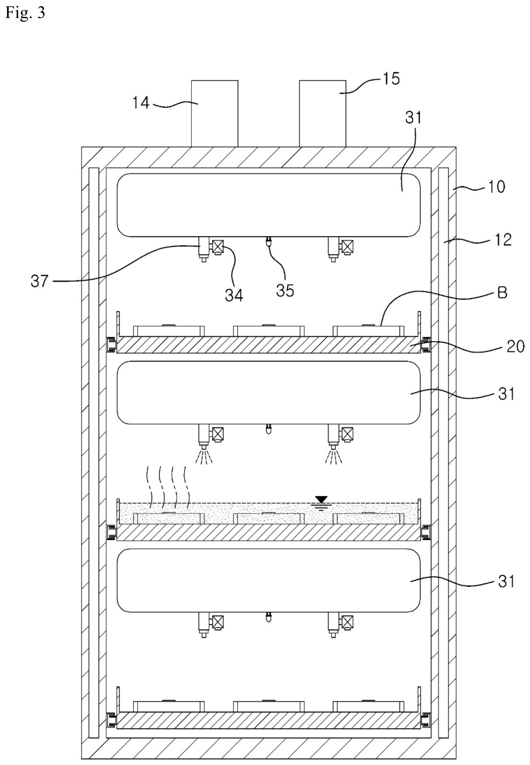

As illustrated in FIG. 3, a vacuum insulation layer 12 maintained in a vacuum state may be formed inside a wall of the housing 10 to minimize heat transfer and safely protect the outside from the heat or flame inside the housing 10 instead of the above-described refractory insulating material. Since heat transfer such as conduction and convection by air is not generated in a vacuum state, excellent insulation performance may be provided.

Also, the inner space of the housing 10 may be divided into a plurality of cells 10a by partition walls that cross each other in horizontal and vertical directions. The plurality of shelves 20 are disposed in the plurality of cells 10a, respectively.

When the inner space is divided into the plurality of cells 10a, inner doors 11a and outer doors 11b may be installed on the housing 10 to independently or collectively open and close the cells 10a.

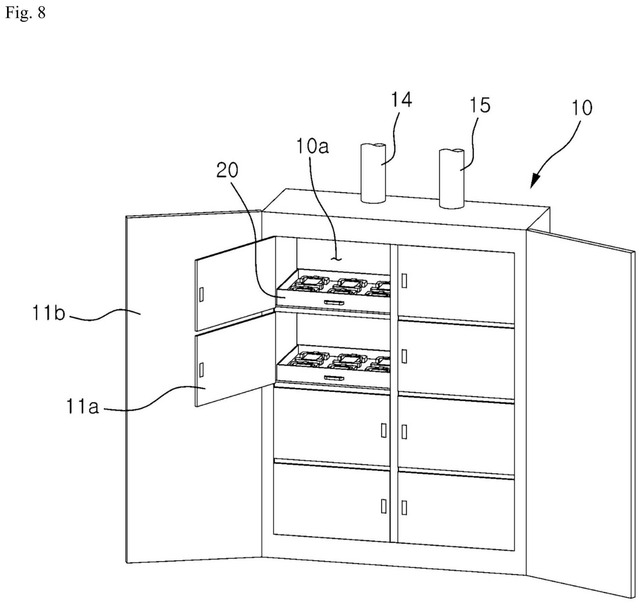

As illustrated in FIG. 8, the same number of inner doors 11a as that of cells 10a may be rotatably installed on the housing 10, so that each cell 10a is independently opened and closed by one inner door 11a, and the single outer door 11b capable of covering an entire front opening area of the plurality of cells 10a may be rotatably installed on the housing 10, so that all the cells are opened or closed simultaneously. More specifically, the outer door 11b is rotatably installed outside the inner doors 11a. Accordingly, only a specific cell may be opened by rotating only selected inner door among the plurality of inner doors 11a in a state in which the outer door 11b is opened.

The shelves 20 are installed one by one and spaced a predetermined distance in a vertical direction in the housing 10. Each shelf 20 may slide into and out of the housing 10. A plurality of secondary batteries B are stored in the shelf 20.

The fire extinguishing agent supply unit 30 serves to quickly extinguish a fire by supplying a fire extinguishing agent into the shelf 20 when a fire occurs in the secondary batteries B stored in the shelf 20, so that the secondary batteries B are immersed in the fire extinguishing agent.

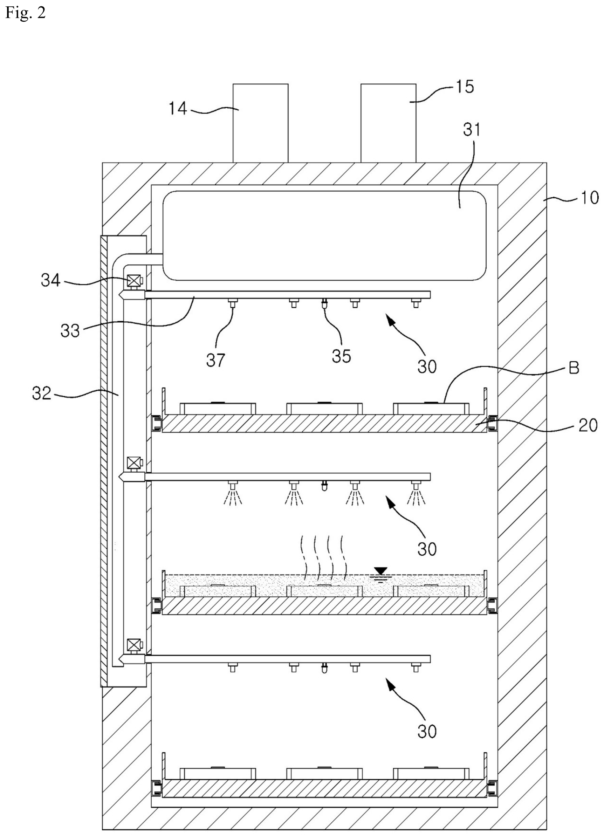

As illustrated in FIG. 2, the fire extinguishing agent supply unit includes: a fire extinguishing agent tank 31; a main pipe 32 connected to the fire extinguishing agent tank 31; a plurality of branch pipes 33 branched from the main pipe 32; a valve 34 configured to open and close the branch pipes 33; a fire-detection sensor 35 disposed in the housing 10; a control unit 36 configured to receive a fire-detection signal from the fire-detection sensor 35; and a plurality of nozzles 37 disposed on the plurality of branch pipes 33, respectively.

The fire extinguishing agent tank 31 is installed at an uppermost portion in the housing 10 to supply a fire extinguishing agent into the shelves 20, which are vertically spaced apart from each other, through the branch pipes 33.

More specifically, although it is described that the fire extinguishing agent tank 31 is installed inside the housing 10, the embodiment of the present invention is not limited thereto. For example, the fire-extinguishing-agent tank 31 may be installed outside the housing 10 instead of being installed inside the housing 10. In particular, when the inner space of the housing 10 is divided into a plurality of cells 10a, the branch pipe 33 extending to each cell 10a may be installed on the fire extinguishing agent tank 31 installed outside the housing 10, and the nozzle 37 may be installed on the branch pipe 33 to spray the fire extinguishing agent into each cell 10a through the corresponding nozzle 37.

The main pipe 32 has one end connected to the fire extinguishing agent tank 31 and the other end extending toward a lower portion of the housing 10.

The branch pipes 33 are disposed above the plurality of shelves 20 vertically disposed in the housing 10, respectively.

The valve 34 is installed at a connection portion between the main pipe 32 and each branch pipe 33 to open and close the branch pipe 33. Thus, when the valve 34 is opened, the fire extinguishing agent stored in the fire extinguishing agent tank 31 is introduced into the branch pipes 33 through the main pipe 32, and when the valve 34 is closed, the fire extinguishing agent is not introduced into the branch pipes 33.

The fire-detection sensor 35, which detects a fire occurring in the secondary batteries B stored on the shelves 20, may be installed at any locations in the inner space of the housing 10, at which fire occurrence is detected as quickly as possible. However, the embodiment of the present invention is not limited thereto. For example, the fire-detection sensor 35 may be installed on a bottom surface of the fire extinguishing agent tank 31, a top surface of the shelf 20, or an outer surface of the nozzle 37. The above-described fire-detection sensor 35 may include at least one of a temperature sensor, an infrared sensor, a gas sensor, or a smoke sensor.

The control unit 36 is disposed at one side of the housing 10 to open the valve 34 when receiving the fire-detection signal from the fire-detection sensor 35. That is, when the fire-detection sensor 35 detects a fire in the secondary batteries B stored on the shelves 20, the control unit 36, which receives this signal, opens the valve 34, so that the fire extinguishing agent stored in the fire extinguishing agent tank 31 is supplied to the nozzles 37 through the branch pipes 33.

At least one nozzle 37 is provided on the branch pipe 33 disposed above the shelf 20 and sprays the fire extinguishing agent supplied from the fire extinguishing agent tank 31 toward the shelf 20 when the valve 34 is opened. The secondary batteries B stored on the shelf 20 are immersed by the sprayed fire extinguishing agent.

The fire extinguishing agent supply unit 30 of the safe storage box for secondary batteries according to the present invention may be configured as illustrated in FIG. 3.

The fire extinguishing agent supply unit 30 in FIG. 3 includes a plurality of fire extinguishing agent tanks 31, a nozzle 37 connected to each of the fire extinguishing agent tanks 31, a valve 34 configured to open and close the nozzle 37, a fire-detection sensor 35 disposed in the housing 10, and a control unit 36 configured to receive a fire-detection signal from the fire-detection sensor 35.

The fire extinguishing agent tanks 31, which has an inner space for storing the fire extinguishing agent, are installed above the plurality of shelves 20, respectively, vertically spaced apart from each other in the housing 10. That is, while one fire extinguishing agent tank 31 in FIG. 2 is installed at an upper portion in the housing 10, the plurality of fire extinguishing agent tanks 31 in FIG. 3 are respectively installed above the shelves 20.

The nozzle 37 is provided to the corresponding fire extinguishing agent tank 31 to spray the fire extinguishing agent stored in the tank 31 into the shelf 20 disposed therebelow.

The valve 34 is provided on the nozzle 37 to open or close the nozzle 37, thereby supplying or blocking the fire extinguishing agent toward the shelf 20.

The fire-detection sensor 35 is installed in the housing 10 to detect a fire occurring in the secondary batteries B stored on the shelves 20.

The control unit 36 opens the valve 34 when receiving a fire-detection signal from the fire-detection sensor 35 to spray the fire extinguishing agent stored in the fire extinguishing agent tank 31 toward the shelf 20 through the nozzle 37. That is, the control unit 36 opens and closes the valve 34 to spray or block the fire extinguishing agent through the nozzle 37.

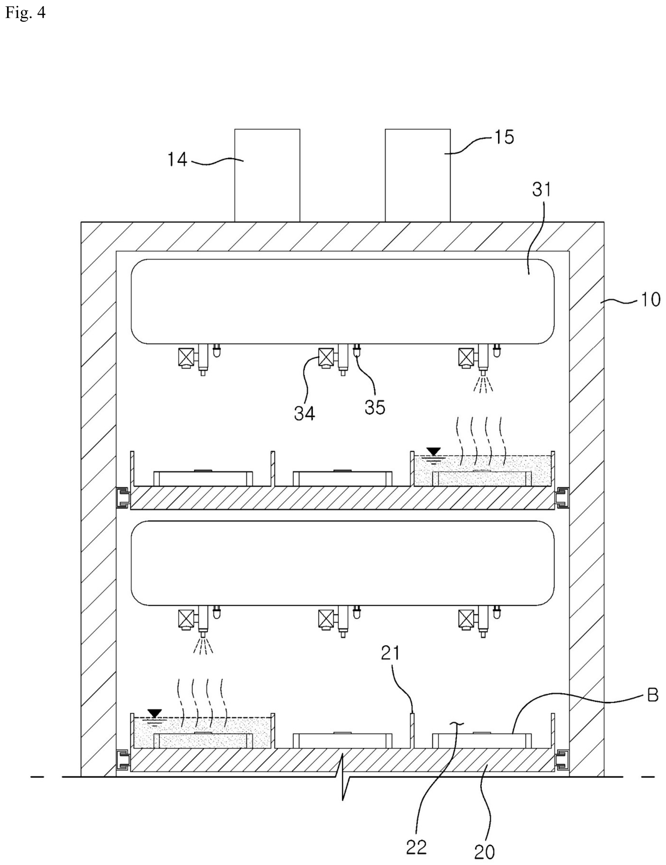

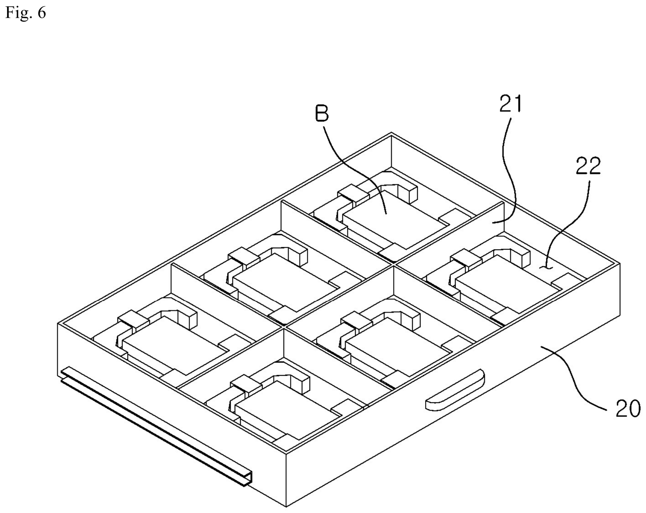

More specifically, as illustrated in FIGS. 4 and 6, the inside of the shelf 20 may be divided into a plurality of separated spaces 22 defined by partition walls 21. When the plurality of separated spaces 22 are defined in the shelf 20, the secondary batteries B are stored one by one in the separated spaces 22.

Here, the nozzles 37 are provided in the same number as the separated spaces 22 to one-to-one correspond to the separated spaces 22 of the shelf 20. In addition, the fire-detection sensor 35 is provided in each nozzle 37 or installed in each separated space 22 to detect occurrence of a fire for each separated space 22.

Accordingly, when the fire-detection sensor 35 detects a fire occurring in a specific separated space 22, only the nozzle 37 disposed directly above the separated space 22 sprays the fire extinguishing agent to fill only the fire occurred space 22 with the extinguishing agent. That is, the nozzle disposed directly above the space in which a fire does not occur does not spray the fire extinguishing agent, and only the nozzle 37 disposed directly above the separated space in which a fire occurs sprays the fire extinguishing agent, so that the secondary battery B stored therein is immersed by the fire extinguishing agent.

The control unit 36 closes the valve 34 to stop further spraying of the fire extinguishing agent after the fire extinguishing agent is sprayed into the separated space 22 through the nozzle 37. Specifically, an amount of the fire extinguishing agent corresponding to an inner volume of each separated space 22 is set in the control unit 36 in advance, in this state, the amount of the fire extinguishing agent corresponding to the inner volume of each separated space 22 is sprayed when a fire occurs, and then, the control unit 36 closes the valve 34 to prevent the fire extinguishing agent from entering adjacent other separated spaces.

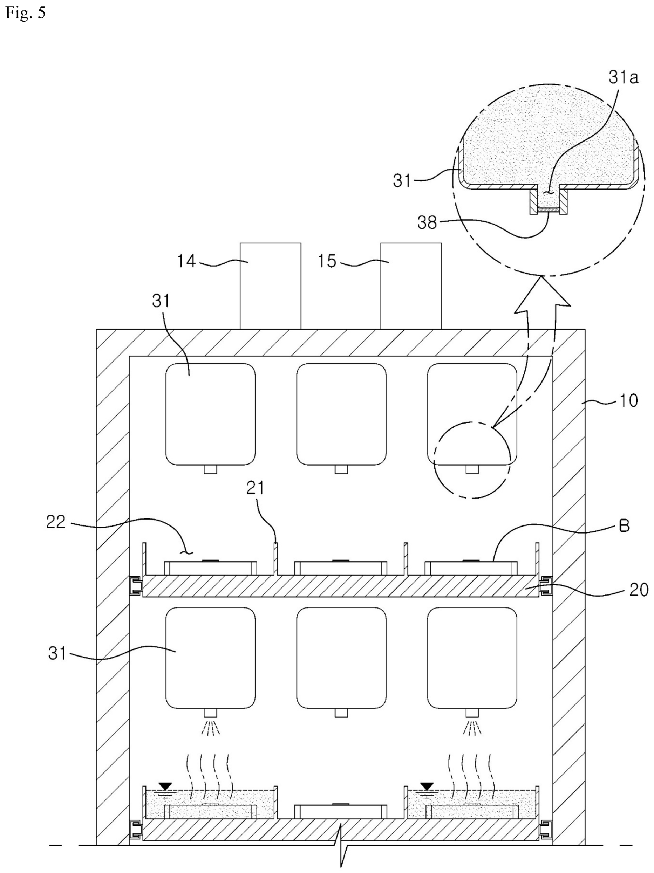

Also, the fire extinguishing agent supply unit 30 of the safe storage box for secondary batteries according to the present invention may also be configured as illustrated in FIG. 5.

The fire extinguishing agent supply unit 30 in FIG. 5 includes a plurality of fire extinguishing agent tanks 31 and a lid 38 installed on the fire extinguishing agent tank 31.

The fire extinguishing agent tank 31 is installed above the shelf 20, which has a plurality of separated spaces 22 defined by partition walls 21 (refer to FIG. 6), and the secondary batteries B are respectively stored therein. That is, the fire extinguishing agent tanks 31 are disposed one by one above the respective separated spaces 22 and store a fire extinguishing agent in an amount corresponding to the inner volume of the separated space 22 disposed directly therebelow.

In addition, the fire extinguishing agent tanks 31 are provided in the same number as the separated spaces 22 in a one-to-one corresponding manner. Thus, when ten separated spaces 22 are formed in the shelf 20, ten fire extinguishing agent tanks 31 are respectively disposed above the ten separated spaces 22.

The lid 38 is installed in a discharge hole 31a defined in a bottom surface of the fire extinguishing agent tank 31 and is made of a material such as lead or plastic that is melted at a predetermined temperature. Thus, when a fire occurs in the secondary batteries B on the shelf 20 and an inner temperature of the housing 10 is equal to or greater than a predetermined threshold, the lid 38 is melted and removed to supply the fire extinguishing agent stored in the fire extinguishing agent tank 31 to the inside of the separated space 22 of the shelf 20 in which a fire occurs through the discharge hole 31a.

The lid 38 may be made of a material that is melted at a fire temperature or made of a thin-film that bursts due to increase in internal pressure of the fire extinguishing agent tank by high temperature.

The fire extinguishing agent supplied from the fire extinguishing agent supply unit 30 to the secondary batteries B of the shelf 20 in which a fire occurs, i.e., the fire extinguishing agent stored in the fire extinguishing agent tank 31, is a NaCl aqueous solution having a predetermined concentration. The NaCl aqueous solution may be used to prevent the secondary batteries from being quickly discharged to spread a fire or cause an explosion.

Also, the safe storage box according to the present invention includes a door closer 13 that automatically closes the door 11 when a fire occurs inside or outside the storage box. The door closer 13 automatically closes the door when a temperature of a front portion of the storage box reaches approximately 50°C, or when an ambient temperature reaches approximately 60°C to approximately 80°C to minimize a secondary damage caused by the fire.

The housing 10 according to the present invention further includes an exhaust hole 15 for forcibly exhausting internal air to the outside and an intake hole 14 for introducing external air into the storage box, each of which is defined in a top surface of the housing 10.

The intake hole 14 and the exhaust hole 15 may be connected to an intake vent and an exhaust vent defined in a ceiling of the inner space. Accordingly, when a fire occurs in the storage box, flames or hot air from inside the storage box are not discharged into the room, and conversely, when a fire occurs in the room, external flames or hot air may not enter into the storage box.

However, the embodiment of the present invention is not limited thereto. For example, the safe storage box may use any system capable of selectively closing the intake and exhaust holes when a fire occurs. For example, a damper or a thermal expansion filter may be installed in the exhaust hole 15 and the intake hole 14 to automatically close the storage box when a fire occurs. Here, a fan may be installed in the exhaust hole 15 to forcibly circulate the air inside the storage box or discharge the air to the outside.

The safe storage box for secondary batteries according to the present invention includes a unit for quickly recognizing a fire and effectively notifying occurrence of the fire to related person and relevant agencies.

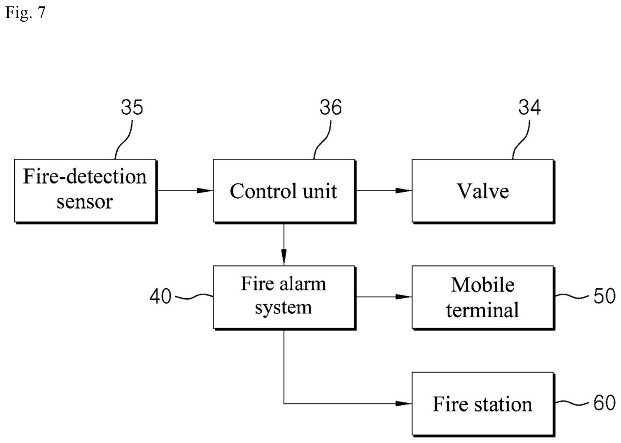

FIG. 7 is a view illustrating an environment in which the safe storage box for secondary batteries according to the present invention, which includes a fire alarm system based on a wired or wireless communication network. The fire alarm system 40 for alerting externally when a fire occurs in the secondary batteries is disposed outside the safe storage box. The fire alarm system 40 includes an internal communication system to determine the occurrence of a fire by using the fire-detection sensor 35 and notify the occurrence of a fire to a mobile terminal 50 of related person and related agencies such as a fire station 60. Here, fire occurrence information may include data such as a unique identification number of the safe storage box for secondary batteries, an installation place thereof, and a current temperature.

### INDUSTRIAL APPLICABILITY

The present invention relates to a safe storage box capable of quickly extinguishing a fire occurring in storage objects such as secondary batteries, acidic or basic substances, and flammable materials under research in laboratories or research institutions. The safe storage box according to the present invention may be widely used in laboratories of universities, research laboratories of companies, and various national research institutions. Thus, the safe storage box according to the present may be widely applied to the industry for manufacturing laboratory and experimental equipment.

## Claims

1. A safe storage box comprising:
a housing (10);
at least one shelf (20) installed in the housing (10) in a vertically spaced manner to store a plurality of storage objects (B); and
a fire extinguishing agent supply unit (30) configured to supply a fire extinguishing agent into the shelf (20) when a fire occurs in the storage objects (B), so that the storage objects (B) are immersed in the fire extinguishing agent.

2. The safe storage box of claim 1, wherein the fire extinguishing agent supply unit (30) comprises:
a fire extinguishing agent tank (31) configured to supply a fire extinguishing agent;
a main pipe (32) connected to the fire extinguishing agent tank (31);
a plurality of branch pipes (33) branched from the main pipe (32) and respectively disposed above the plurality of shelves (20);
a valve (34) configured to open and close the branch pipes (33);
a fire-detection sensor (35) disposed in the housing (10) to detect a fire occurring in the storage objects (B);
a control unit (36) configured to open the valve (34) when receiving a fire-detection signal from the fire-detection sensor (35); and
a plurality of nozzles (37) respectively disposed on the plurality of branch pipes (33) to spray the fire extinguishing agent supplied from the fire extinguishing agent tank (31) toward the shelves (20) when the valve (34) is opened.

3. The safe storage box of claim 1, wherein the fire extinguishing agent supply unit (30) comprises:
a plurality of fire extinguishing agent tanks (31) respectively installed above the plurality of shelves (20);
nozzles (37) respectively disposed on the plurality of fire extinguishing agent tanks (31);
a valve (34) configured to open and close the nozzles (37);
a fire-detection sensor (35) disposed in the housing (10) to detect a fire occurring in the storage objects (B);
a control unit (36) configured to open the valve (34) when receiving a fire-detection signal from the fire-detection sensor (35), thereby spraying the fire extinguishing agent stored in the fire extinguishing agent tank (31) toward the shelves (20) through the nozzles (37).

4. The safe storage box of claim 3, wherein the inside of the shelf (20) is divided into a plurality of separated spaces (22) by partition walls (21), so that the storage objects (B) are respectively stored in the separated spaces (22),
the fire-detection sensor (35) detects occurrence of a fire for each separated space (22), and
the nozzles (37) are provided in the same number as the separated spaces (22) in a one-to-one corresponding manner so that only the nozzle (37) corresponding to the separated space (22) in which a fire occurs sprays the fire extinguishing agent.

5. The safe storage box of claim 4, wherein the control unit (36) closes the valve (34) to prevent the fire extinguishing agent from being sprayed after the fire extinguishing agent with an amount corresponding to an inner volume of the separated space (22) is sprayed through the nozzle (37).

6. The safe storage box of claim 1, wherein the inside of the shelf (20) is divided into a plurality of separated spaces (22) by partition walls (21), so that the storage objects (B) are respectively stored in the separated spaces (22), and
the fire extinguishing agent supply unit (30) comprises:
a plurality of fire extinguishing agent tanks (31) respectively disposed above the separated spaces (22) to store a fire extinguishing agent with an amount corresponding to an inner volume of the separated space (22); and
a lid (38) that is installed in a discharge hole (31a) defined in a bottom surface of the fire extinguishing agent tank (31) and is melted when a predetermined temperature is reached or burst by pressure of the fire extinguishing agent.

7. The safe storage box of claim 1, wherein the storage objects (B) are secondary batteries, and
the fire extinguishing agent supplied from the fire extinguishing agent supply unit (30) is a NaCl aqueous solution having a predetermined concentration.

8. The safe storage box of claim 1, wherein a refractory insulating material is applied to the inside of the housing (10), or a vacuum insulation layer (12) maintaining a vacuum state is provided in the housing (10).

9. The safe storage box of claim 2, further comprising a fire alarm system (40) wired or wirelessly connected to the fire-detection sensor (35) to issue an alarm to the outside when a fire occurs in the storage objects (B),
wherein the fire alarm system (40) comprises a communication unit configured to notify occurrence of a fire to a mobile terminal (50) or a fire station (60).

10. The safe storage box of claim 1, wherein a door (11) configured to open and close a front surface of the housing (10) is provided, and the door (11) further comprises a door closer (13) configured to automatically close the door (11) when a predetermined temperature is reached.

11. The safe storage box of claim 1, wherein the housing (10) further comprises an intake hole (14) configured to introduce external air into the housing (10) and an exhaust hole (15) configured to discharge internal air of the housing (10) to the outside.

12. The safe storage box of claim 11, wherein a fan is installed in the exhaust hole (15) to forcibly circulate the internal air of the housing (10) or discharge the internal air to the outside.
